# EUROPEAN PATENT SPECIFICATION

(11) **EP 1 204 778 B1**
(45) Date of publication and mention of the grant of the patent: **27.09.2006**
(21) Application number: 00930876.8
(22) Date of filing: 02.06.2000
(51) Int. Cl.: H01M 8/02, H01M 8/12, C22C 38/06, C22C 38/02

(54) **AIR-SIDE SOLID OXIDE FUEL CELL COMPONENTS**
LUFTSEITIGE KOMPONENTEN EINER FESTOXID-BRENNSTOFFZELLE
ELEMENTS DE PILE A COMBUSTIBLE A OXYDE SOLIDE EXPOSES A L'AIR

(30) Priority: 04.06.1999 AU PQ078999
(43) Date of publication of application: 15.05.2002
(73) Proprietor: Ceramic Fuel Cells Limited, Noble Park, VIC 3174 (AU)
(72) Inventor: JAFFREY, Donald, Mount Dandenong, VIC 3767 (AU)
(74) Representative: Jones, Helen M.M.
(86) International application number: PCT/AU2000/000630
(87) International publication number: WO 2000/075389

(56) References cited:
- DE-A1- 4 016 157
- US-A- 5 565 167
- PATENT ABSTRACTS OF JAPAN vol. 008, no. 067 (C-216), 29 March 1984 (1984-03-29) -& JP 58 217677 A (HITACHI KINZOKU KK), 17 December 1983 (1983-12-17)
- PATENT ABSTRACTS OF JAPAN vol. 1996, no. 06, 28 June 1996 (1996-06-28) -& JP 08 041596 A (NKK CORP), 13 February 1996 (1996-02-13)
- PATENT ABSTRACTS OF JAPAN vol. 1997, no. 07, 31 July 1997 (1997-07-31) -& JP 09 082345 A (MITSUBISHI ELECTRIC CORP), 28 March 1997 (1997-03-28)
- DATABASE WPI Derwent Publications Ltd., London, GB; Class X16, AN 1988-319147/45 & JP 63 236 267 A (AGENCY OF IND SCI (KOBM)) 03 October 1988
- DATABASE WPI Derwent Publications Ltd., London, GB; Class M27, AN 1977-62529Y/35 & SU 544 709 A (SHUR N.F.) 01 March 1977
- DATABASE WPI Derwent Publications Ltd., London, GB; Class M13, AN 1986-110024/17 & JP 1 052 356 A (NIPPON STEEL CORP) 15 March 1986
- DATABASE WPI Derwent Publications Ltd., London, GB; Class M27, AN 1982-29632E/15 & JP 57 039 159 A (SHIN HOKOKU SEITETSU KK (YAWA)) 04 March 1982

## Description

The present invention relates to solid oxide fuel cells and is particularly concerned with components for solid oxide fuel cells systems which are adapted to be exposed to a temperature in excess of 750°C and to an oxidising atmosphere. Such components include gas separators between adjacent fuel cells, and heat exchangers.

The purpose of a gas separator in planar fuel cell assemblies is to keep the oxygen containing gas supplied to the cathode side of one fuel cell separated from the fuel gas supplied to the anode side of an adjacent fuel cell and to conduct heat generated in the fuel cells away from the fuel cells. The gas separator may also conduct electricity generated in the fuel cells away from the fuel cells, but this function may alternatively be performed by a separate member between each fuel cell and the gas separator.

Sophisticated ceramics for use in fuel cell gas separators have been developed which are electrically conductive, but these suffer from a relatively high fragility, low thermal conductivity and high cost. Special metallic alloys have also been developed, but it has proved difficult to avoid the various materials of the fuel cell assembly and the interfaces between them degrading or changing substantially through the life of the fuel cell, particularly insofar as their electrical conductivity is concerned, because of the tendency of different materials to chemically interact at the high temperatures which are required for efficient operation of a solid oxide fuel cell. For example, most metallic gas separators contain substantial quantities of the element chromium which is used to impart oxidation resistance to the metal as well as other properties.

It has been found that where chromium is present in more than minute quantities it may combine with oxygen or oxygen plus moisture to form highly volatile oxide or oxyhydroxide gases under conditions which are typical of those experienced in operating solid oxide fuel cells. These volatile gases are attracted to the cathode-electrolyte interface where they may react to form compounds which are deleterious to the efficiency of the fuel cell. If these chromium reactions are not eliminated or substantially inhibited, the performance of the fuel cell deteriorates with time to the point where the fuel cell is no longer effective.

Several of these metallic alloys and one proposal for alleviating this problem are described in our patent application WO96/28855 in which a chromium-containing gas separator is provided with an oxide surface layer which reacts with the chromium to form a spinel layer between the substrate and the oxide surface layer and thereby tie in the chromium. However, at present these specialist alloys remain expensive for substantial use in fuel cell assemblies, and it would be preferably to have a lower cost alternative.

Special heat resistant steels have also been developed to be stable at high temperature in fuel cell atmospheres. The significant feature of all heat resistant steels is the oxide layer, particularly its type and nature, which is formed when the steel is exposed to mildly and strongly oxidising conditions at elevated temperatures. Heat resisting steels form tight, adherent, dense oxide layers which prevent further oxidation of the underlying metal. These oxide layers are composed of chromium, aluminium or silicon oxides or some combination of them. These oxide layers are very effective in providing a built-in resistance to degradation due to high temperature oxidation.

However, while this feature is used to advantage in many applications, the presence of this oxide layer has until recently been considered to inhibit the use of these steels in key components of solid oxide fuel cells. The oxides, especially those of silicon and aluminium, are electrically insulating at all temperatures, and this is a major problem for those components in a fuel cell which must act as electrical current collectors. Of all the heat resisting steels available, those based on the iron-chromium binary systems are the best in this regard, but they too have severe limitations. In particular, they generally contain more than 12 wt% chromium to provide the desired oxidation resistance, leading to the problems described above. At levels of less than 12 wt% Cr, tight, adherent, dense chromium oxide layers do not form on the iron-chromium alloys and the alloys are unsuitable for use in oxidising atmosphere at elevated temperatures. At chromium contents of 12 wt% or more, special coatings or treatments are again required to prevent the chromium-based gases escaping from a gas separator formed of the alloy.

One approach to alleviating these disadvantages of heat resistant steel gas separators is described in our patent application WO 99/25890 or in DE-A-40 16 157. However, this and most other heat resistant steels are specialist materials containing substantial levels of Cr plus other compositional controls which means that their cost will remain high.

Steels having compositions with low levels of Cr have been proposed in US patent specifications 3,657,024 and 3,761,253, but neither specification exemplifies an alloy having an Al content greater than 4.09 wt%. In both specifications the intention was to provide an electrical-sheet steel having magnetic properties, and no emphasis is placed on providing a low-chromium heat resistant steel capable of forming a thin, adherent alumina-based surface scale to provide oxidation resistance to the steel. Furthermore, no suggestion is made in either specification of providing an alloy which is suitable for use in components on the air side of a solid oxide fuel cell system.

It is an object of the present invention to provide a component for a solid oxide fuel cell system formed of a heat resistant steel which is adapted to be exposed to a temperature in excess of 750°C and to an oxidising atmosphere, but in which the aforementioned disadvantages associated with having high levels of Cr may be alleviated.

According to the present invention there is provided a solid oxide fuel cell system component which is adapted to be exposed to an oxidising atmosphere in the fuel cell system and which is formed of a heat resistant alloy having a composition, in wt%, of:

| | |
|---|---|
| Al | 5.0 - 10.0 |
| Si | 0.1 - 3.8 |
| Mn | ≤ 0.5 |
| Cu | ≤ 0.23 |
| Ni | ≤ 0.61 |
| C | ≤ 0.02 |
| P | ≤ 0.04 |
| S | ≤ 0.04 |
| Cr | < 5.0 |

Residue Fe, excluding incidental impurities.

Further according to the present invention, there is provided a solid oxide fuel cell system in which one or more components adapted to be exposed to a temperature in excess of 750°C and an oxidising atmosphere are formed of a heat resistant alloy having a composition as defined in the immediately preceding paragraph.

The component may be in the form of a manifold, base plate, current collector strap, ducting or, for example, a heat exchanger or heat exchanger plate used in a solid oxide fuel cell system, but preferably the component is a gas separator disposed or adapted to be disposed between adjacent fuel cells.

An advantage of solid oxide fuel cell system components in accordance with the invention is that they are capable of forming a stable Al₂O₃ layer on the surface when exposed to oxidising atmosphere at elevated temperature. The component preferably does not contain any chromium, but levels up to about 5 wt% have been found to not interfere with the formation of an alumina layer which can then prevent the escape of chromium rich vapour. The formation of the alumina layer may be performed by heating in an oxidising atmosphere at a temperature of at least 950°C, preferably no more than 1200°C and more preferably in the range 1000 - 1100°C. The length of the heat treatment is dependent upon the elevated temperature. For example, at temperatures in the range of 1200°C, a sufficient thickness of alumina may be formed on the component surface in 1 hour or less. At the lowest temperature of 950°C, a sufficient thickness of alumina may take 10 - 20 hours or more to form. The alumina layer preferably has a thickness as small as 1 - 3 µm, but greater thicknesses up to 5 or even 10 microns may be acceptable.

A minimum level of 5 wt% Al is necessary in the component in order to form the alumina layer when subjected to the heat treatment. Preferably, the alloy contains more than 5.2 wt% Al. A maximum of 10 wt% Al is provided in order to ensure that the alloy of the component remains within the cold workability limit for Fe-Si-Al alloys. The maximum may be varied by other alloying elements which are acceptable in a fuel cell component exposed to oxidising atmosphere at elevated temperature, but the preferred maximum is about 8.5 wt% since no advantage has been recognised in adding more.

In an alloy containing 10.6 wt% Al and 0.55 wt% Si, residual Fe, there were signs that nodules had begun to form in isolated locations, perhaps indicating the boundary between compositions forming stable oxide layers and those lacking this property. A solid oxide fuel cell system component formed of such an alloy is outside the scope of the invention.

The silicon content of the alloy is also restricted by the cold workability considerations and by other steel-making considerations. With increasing aluminium content, the silicon content may be decreased in order to ensure the alloy remains within the cold workability limit, and preferably the Si content is no more than about 1.5 wt%. At higher levels, and possibly even at levels above about 1 wt% Si, processing difficulties may be encountered when large volumes of the alloy are made because of the formation of fayalite at elevated temperature. The presence of Si in the Fe-Al alloy assists the fluidity of the steel at high levels of aluminium during melting. A minimum 0.1 wt% Si also alleviates the formation of iron oxide nodules should the alumina surface layer be damaged. Preferably, the alloy comprises from 6.5 to 7.5 wt% total of Al and Si in combination.

Preferably any manganese present is at levels of less than 0.05 wt% since alloys containing more Mn than this may be difficult to roll.

Manganese and the other non-Fe-Al-Si elements may be present as tramp elements, and advantageously the alloy composition may be produced from selected scrap metal, including, but not restricted to, cast and other forms of aluminium, aluminium-silicon alloys, all other aluminium alloy scrap, recycled steel and aluminium cans, Fe-Si transformer core scrap and plain steel, particularly low alloy plain carbon steels. In addition, ferro-silicon and ferro-aluminium alloys of the type used for modifying steel compositions during production are suitable source materials for the Fe-Al-Si alloy. The preferred alloy composition is, in wt%:

| | |
|---|---|
| Al | 6.0 ± 1.0 |
| Si | 1.0 ± 0.5 |
| C | 0.005 - 0.02 |
| P | ≤ 0.04 |
| S | ≤ 0.04 |
| Cr | ≤ 0.10 |
| (Al + Si) | = 6.5 to 7.5 |

Residue Fe, excluding incidental impurities.

The alloys may be prepared by, for example, argon arc melting or any other standard steel making process, such as open hearth, or BOF.

The most preferred alloy composition having no Cr conveys particular benefits for gas separators of solid oxide fuel cell assemblies and other components in contact with the inlet air stream to the cells since any breakdown, damage or loss of the Al₂O₃ layer, for whatever reason, can not lead to Cr egress as it can with all Cr containing steels/other heat resisting steels and alloys.

A component in the form of a gas separator in accordance with the present invention may have gas channels formed on opposed sides, for example as described in our aforementioned patent application WO 96/28855. However, preferably, the gas flow passages are formed in or provided by a mesh or other structure provided between the respective side of the gas separator and the adjacent electrode, for example as described in our patent application WO 98/57384.

Most preferably, a gas separator in accordance with the invention would be used with a separate electrical conductor between the gas separator and each electrode. One proposal for separate electrical conductors on respective sides of a gas separator is disclosed in our patent application WO 99/13522.

### Examples:

The Fe-Al-Si alloy system was investigated to find a suitable alumina-forming alloy for particular application as a non-current collecting gas separator. Initial work was conducted on a total of 12 alloy compositions, including one quaternary alloy containing chromium. Alloys were prepared by argon arc melting and their oxidation behaviour and mechanical properties were assessed. Compositions are listed in Table I below.

**Table 1. Alloy compositions by atomic %**

| Alloy No | Nominal Composition, at. % | Alloy No | Nominal Composition, at. % |
|---|---|---|---|
| 1 | Fe-10.5Al-2Si | 7 | Fe-11.5Al-2Si |
| 2 | Fe-4Al-5Si | 8 | Fe-1Al-7Si |
| 3 | Fe-20Al-1 Si-5Cr | 9 | Fe-12Al-1.25Si |
| 4 | Fe-5Al-4.5Si | 10 | Fe-13 Al-1Si |
| 5 | Fe-20Al-1Si | 11 | Fe-14Al-0.75Si |
| 6 | Fe-15Al-0.5Si | 12 | Fe-11A1-1.85Si |

In the Fe-Al-Si ternary system atomic % equates to approximately 2 x weight %.

Most of the alloys in Table 1 (Alloy Nos 1, 2, 4, and 6-12) fall within the α-Fe phase field (corresponding to the cold-working range) of the ternary Fe-Al-Si system. Alloy 5 and alloy 3, based on the ductile Fe-20Al (at.%), fall just outside this range but were still found to be workable.

A second series of alloys 15 to 19 was prepared with selected additions to determine the effect of minor elements, commonly present in stainless steel scrap, on rolling and oxidation behaviour. Compositions are listed in Table 2.

**Table 2. Alloy Compositions by atomic %**

| Alloy Number | Composition, at.% |
|---|---|
| 15 | Fe-11.5Al-2Si-1Mn |
| 16 | Fe-11.5Al-2Si-0.2Cu |
| 17 | Fe-11.5Al-2Si-0.55Ni |
| 18 | Fe-11.5Al-2Si-0.2Cu-0.5Ni |
| 19 | Fe-11.5Al-2Si-1Mn-0.2Cu-0.5Ni |

All alloys 1 - 12 and 15-19 were successfully hot rolled at 900°C. Small ingot samples were rolled to approximately 1mm thickness, using ~30% roll-reductions. All rolled alloys were posted-annealed at 900°C for 1 hour and all were successfully cold rolled, using ~35% roll-reductions, except for Alloy No. 3.

### Oxidation Behaviour

Oxidation tests on alloys 1-12 and 15-19 were conducted at 900°C for 100 hours in static air and the oxidised samples were examined by XRD and SEM. All of the alloys produced thin, adherent alumina surface scales, except for Alloy Nos. 2 - 4 and 8. In the case of alloys 2, 3, 4 and 8, nodular iron oxides or multi-layered scales were formed and some spalling was observed. Continued growth of these iron oxides over longer exposure times resulted in the catastrophic failure of the scales. In the case of alloy 5, there were signs that nodules had begun to form in isolated locations, perhaps indicating the boundary between compositions forming stable oxide layers and those lacking this property. In the case of alloy 8 SiO₂-based scales were produced, with no alumina surface scale, and the alloy would produce processing difficulties in larger volumes due to the formation of fayalite. No silicon oxides were detected in any of the samples, except sample 8, by XRD, but silicon was detected in the alumina scales using EDAX.

This shows that Fe-Al-Si alloys having a composition range in accordance with the invention are capable of forming thin, adherent alumina oxidation resistant surface layers. This permits the alloys to be used in non-electrically conductive, heat resistant components on the oxygen-containing gas side of a fuel cell assembly, particularly in gas separators. The alloys in accordance with the invention have thermal conductivities suitable to enable them to readily transfer heat away from the adjacent fuel cell or cells.

The invention also includes all of the steps, features, compositions and compounds referred to or indicated in this specification, individually or collectively, and any and all combinations of any two or more of said steps, features, compositions and components.

## Claims

1. A solid oxide fuel cell system comprising a component which is adapted to be exposed to an oxidising atmosphere in the fuel cell system at a temperature in excess of 750°C and which is formed of a heat resistant alloy, **characterised in that** the alloy has a composition, in wt%, of:
| | |
|---|---|
| Al | 5.0 - 10.0 |
| Si | 0.1 - 3.8 |
| Mn | ≤ 0.5 |
| Cu | ≤ 0.23 |
| Ni | ≤ 0.61 |
| C | ≤ 0.02 |
| P | ≤ 0.04 |
| S | ≤ 0.04 |
| Cr | < 5.0 |
Residue Fe, excluding incidental impurities.

2. A solid oxide fuel cell system according to claim 1, **characterised in that** the alloy contains no more than about 8.5 wt% Al.

3. A solid oxide fuel cell system according to claim 1 or 2, **characterised in that** the alloy contains less than 0.05 wt% Mn.

4. A solid oxide fuel cell system according to any one of claims 1 to 3, **characterised in that** the alloy has a composition, in wt%, of:
| | |
|---|---|
| Al | 6.0 ± 1.0 |
| Si | 1.0 ± 0.5 |
| C | 0.005 - 0.02 |
| P | ≤ 0.04 |
| S | ≤ 0.04 |
| Cr | ≤ 0.10 |
| (Al + Si) | = 6.5 to 7.5 |
Residue Fe, excluding incidental impurities.

5. A solid oxide fuel cell system according to any one of the preceding claims, **characterised in that** the alloy contains no Cr.

6. A solid oxide fuel cell system according to any one of the preceding claims, **characterised in that** the component has a surface layer of Al₂O₃.

7. A solid oxide fuel cell system according to claim 6, **characterised in that** the Al₂O₃ surface layer on the component is formed by exposure of a surface of the component to oxidising atmosphere at elevated temperature.

8. A solid oxide fuel cell system according to claim 6 or 7, **characterised in that** the Al₂O₃ surface layer has a thickness in the range of from about 1 to about 10 microns.

9. A solid oxide fuel cell system according to claim 6 or 7, **characterised in that** the Al₂O₃ surface layer has a thickness in the range of from about 1 to about 3 microns.

10. A solid oxide fuel cell system according to any one of the preceding claims, **characterised in that** source material for the alloy at least includes scrap metal.

11. A solid oxide fuel cell system according to any one of the preceding claims, **characterised in that** the component is a gas separator disposed between adjacent fuel cells in the system.

12. A solid oxide fuel cell system according to any one of claims 1 to 10, **characterised in that** the component is selected from the group consisting of a manifold, a base plate, a current collector strap, ducting, a heat exchanger and a heat exchanger plate.

13. Use of a component formed of a heat resistant alloy in a solid oxide fuel cell system in which the component is exposed to a temperature in excess of 750°C and an oxidising atmosphere, **characterised in that** the alloy has a composition, in wt%, of:
| | |
|---|---|
| Al | 5.0 - 10.0 |
| Si | 0.1 - 3.8 |
| Mn | ≤ 0.5 |
| Cu | ≤ 0.23 |
| Ni | ≤ 0.61 |
| C | ≤ 0.02 |
| P | ≤ 0.04 |
| S | ≤ 0.04 |
| Cr | < 5.0 |
Residue Fe, excluding incidental impurities.

## Patentansprüche

1. Festoxidbrennstoffzellensystem, das eine Komponente umfasst, die geeignet ist, einer oxidierenden Atmosphäre in dem Brennstoffzellensystem bei einer Temperatur von über.750 °C ausgesetzt zu werden und welche aus einer hitzebeständigen Legierung gebildet ist, **dadurch gekennzeichnet, dass** die Legierung eine in Gew.% angegebene Zusammensetzung besitzt von:
| | |
|---|---|
| Al | 5,0 bis 10,0, |
| Si | 0,1 bis 3,8, |
| Mn | ≤ 0,5, |
| Cu | ≤ 0,23, |
| Ni | ≤ 0,61, |
| C | ≤ 0,02, |
| P | ≤ 0,04, |
| S | ≤ 0,04, |
| Cr | ≤ 5,0 und |
Rest Fe, ausschließlich zufälliger Verunreinigungen.

2. Festoxidbrennstoffzellensystem nach Anspruch 1, **dadurch gekennzeichnet, dass** die Legierung nicht mehr als etwa 8,5 Gew.% Al enthält.

3. Festoxidbrennstoffzellensystem nach Anspruch 1 oder 2, **dadurch gekennzeichnet, dass** die Legierung weniger als 0,05 Gew.% Mn enthält.

4. Festoxidbrennstoffzellensystem nach einem der Ansprüche 1 bis 3, **dadurch gekennzeichnet, dass** die Legierung eine in Gew.% angegebene Zusammensetzung besitzt von:
| | |
|---|---|
| Al | 6,0 ± 1,0, |
| Si | 1,0 ± 0,5, |
| C | 0,005 bis 0,02, |
| P | ≤ 0,04, |
| S | ≤ 0,04, |
| Cr | ≤ 0,10 und |
| (Al + Si) | = 6,5 bis 7,5, |
Rest Fe, ausschließlich zufälliger Verunreinigungen.

5. Festoxidbrennstoffzellensystem nach einem der vorhergehenden Ansprüche, **dadurch gekennzeichnet, dass** die Legierung kein Cr enthält.

6. Festoxidbrennstoffzellensystem nach einem der vorhergehenden Ansprüche, **dadurch gekennzeichnet, dass** die Komponente eine Al₂O₃-Oberflächenschicht besitzt.

7. Festoxidbrennstoffzellensystem nach Anspruch 6, **dadurch gekennzeichnet, dass** die Al₂O₃-Oberflächenschicht der Komponente gebildet worden ist, indem eine Oberfläche der Komponente bei hoher Temperatur einer oxidierenden Atmosphäre ausgesetzt wurde.

8. Festoxidbrennstoffzellensystem nach Anspruch 6 oder 7, **dadurch gekennzeichnet, dass** die Dicke der Al₂O₃₋Oberflächenschicht etwa 1 bis etwa 10 Mikrometer beträgt.

9. Festoxidbrennstoffzellensystem nach Anspruch 6 oder 7, **dadurch gekennzeichnet, dass** die Dicke der Al₂O₃₋Oberflächenschicht etwa 1 bis etwa 3 Mikrometer beträgt.

10. Festoxidbrennstoffzellensystem nach einem der vorhergehenden Ansprüche, **dadurch gekennzeichnet, dass** das Ausgangsmaterial für die Legierung Altmetall wenigstens enthält.

11. Festoxidbrennstoffzellensystem nach einem der vorhergehenden Ansprüche, **dadurch gekennzeichnet, dass** die Komponente ein zwischen im System benachbarten Brennstoffzellen angeordneter Gasseparator ist.

12. Festoxidbrennstoffzellensystem nach einem der Ansprüche 1 bis 10, **dadurch gekennzeichnet, dass** die Komponente aus der Gruppe ausgewählt ist, die aus einem Verteiler, einer Grundplatte, einer Stromabnehmerschelle, einer Durchführung, einem Wärmetauscher und einer Wärmetauscherplatte besteht.

13. Verwendung einer aus einer hitzebeständigen Legierung gebildeten Komponente in einem Festoxidbrennstoffzellensystem, in welchem die Komponente einer Temperatur von über 750 °C und einer oxidierenden Atmosphäre ausgesetzt ist, **dadurch gekennzeichnet, dass** die Legierung eine in Gew.% angegebene Zusammensetzung besitzt von:
| | |
|---|---|
| A1 | 5,0 bis 10,0, |
| Si | 0,1 bis 3,8, |
| Mn | ≤ 0,5, |
| Cu | ≤ 0,23, |
| Ni | ≤ 0,61, |
| C | ≤ 0,02, |
| P | ≤ 0,04, |
| S | ≤ 0,04, |
| Cr | ≤ 5,0 und |
Rest Fe, ausschließlich zufälliger Verunreinigungen.

## Revendications

1. Système de piles à combustible à oxyde solide comprenant un élément qui est adapté pour être exposé à une atmosphère oxydante dans le système de pile à combustible à une température supérieure à 750 °C et qui est formé d'un alliage résistant à la chaleur, **caractérisé en ce que** l'alliage a la composition suivante, en % en poids :
| | |
|---|---|
| Al | 5,0 - 10,0 |
| Si | 0,1 - 3,8 |
| Mn | ≤ 0,5 |
| Cu | ≤ 0,23 |
| Ni | ≤ 0,61 |
| C | ≤ 0,02 |
| P | ≤ 0,04 |
| S | ≤ 0,04 |
| Cr | < 5,0 |
Résidu Fe, à l'exclusion d'impuretés éventuelles.

2. Système de piles à combustible à oxyde solide selon la revendication 1, **caractérisé en ce que** l'alliage ne contient pas plus d'environ 8,5 % en poids de Al.

3. Système de piles à combustible à oxyde solide selon la revendication 1 ou 2, **caractérisé en ce que** l'alliage contient moins de 0,05 % en poids de Mn.

4. Système de piles à combustible à oxyde solide selon l'une quelconque des revendications 1 à 3, **caractérisé en ce que** l'alliage a la composition suivante, en % en poids :
| | |
|---|---|
| Al | 6,0 ± 1,0 |
| Si | 0,1 ± 0,5 |
| C | 0,005 - 0,02 |
| P | ≤ 0,04 |
| S | ≤ 0,04 |
| Cr | ≤ 0,10 |
| (Al + Si) | = 6,5 à 7,5 |
Résidu Fe, à l'exclusion d'impuretés éventuelles.

5. Système de piles à combustible à oxyde solide selon l'une quelconque des revendications précédentes, **caractérisé en ce que** l'alliage ne contient pas de Cr.

6. Système de piles à combustible à oxyde solide selon l'une quelconque des revendications précédentes, **caractérisé en ce que** l'élément a une couche de surface de Al₂O₃.

7. Système de piles à combustible à oxyde solide selon la revendication 6, **caractérisé en ce que** la couche de surface de Al₂O₃ sur l'élément est formée par exposition d'une surface de l'élément à une atmosphère oxydante à température élevée.

8. Système de piles à combustible à oxyde solide selon la revendication 6 ou 7, **caractérisé en ce que** la couche de surface de Al₂O₃ a une épaisseur comprise dans la gamme allant d'environ 1 à environ 10 micromètres.

9. Système de piles à combustible à oxyde solide selon la revendication 6 ou 7, **caractérisé en ce que** la couche de surface de Al₂O₃ a une épaisseur comprise dans la gamme allant d'environ 1 à environ 3 micromètres.

10. Système de piles à combustible à oxyde solide selon l'une quelconque des revendications précédentes, **caractérisé en ce que** la matière de base pour l'alliage comprend au moins des déchets métalliques.

11. Système de piles combustible à oxyde solide selon l'une quelconque des revendications précédentes, **caractérisé en ce** l'élément est un séparateur de gaz placé entre des piles à combustible adjacentes dans le système.

12. Système de piles à combustible à oxyde solide selon l'une quelconque des revendications 1 à 10, **caractérisé en ce que** l'élément est choisi dans le groupe constitué par un manifold, une plaque de base, une barrette de collecteur de courant, des gaines, un échangeur de chaleur et une plaque d'échangeur de chaleur.

13. Utilisation d'un élément formé d'un alliage résistant à la chaleur dans un système de piles à combustible à oxyde solide dans lequel l'élément est exposé à une température supérieure à 750 °C et à une atmosphère oxydante, **caractérisé en ce que** l'alliage a la composition suivante, en % en poids :
| | |
|---|---|
| Al | 5,0 - 10,0 |
| Si | 0,1 - 3,8 |
| Mn | ≤ 0,5 |
| Cu | ≤ 0,23 |
| Ni | ≤ 0,61 |
| C | ≤ 0,02 |
| P | ≤ 0,04 |
| S | ≤ 0,04 |
| Cr | < 5,0 |
Résidu Fe, à l'exclusion d'impuretés éventuelles.
